# EUROPEAN PATENT APPLICATION

(11) **EP 2 557 759 A1**
(43) Date of publication of application: **13.02.2013**
(21) Application number: 12180189.8
(22) Date of filing: 10.08.2012
(51) Int. Cl.: H04L 29/12

(54) **White listing dns top-talkers**

(30) Priority: 11.08.2011 US 201161522493 P
(71) Applicant: Verisign, Inc., Reston, VA 20190 (US)
(72) Inventor: Osterweil, Eric, Reston, VA Virginia 20190 (US); McPherson, Danny, Reston, VA Virginia 20190 (US)
(74) Representative: Benson, Christopher

(57) **Abstract**

Systems and methods for creating a list of trustworthy resolvers in a Domain Name System DNS. A computer receives a DNS resolver profile for a resolver sending queries to a domain name server. The resolver profile is based on one or more of a top-talker status of the resolver, a normalcy of distribution of domain names queried, a continuity of distribution of query type, and an IP time-to-live variance of queries from the resolver. Resolver profiles can be compared to a trust policy to determine whether the resolver is trustworthy. Resolvers deemed trustworthy can be added to a list of trustworthy resolvers. Embodiments can detect the occurrence of a network-based attack (e.g. denial of servcie attacks DoS, DDoS). Embodiments can mitigate the effect of a network-based attack by responding only to queries from resolvers on the list of trustworthy resolvers.

## Description

### Related Application

This application claims the benefit of priority of U.S. Provisional Application No. 61/522,493, filed August 11, 2011, which is incorporated herein by reference.

### Technical Field

This disclosure is generally directed to systems and methods for detecting and responding to Distributed Denial-of-Service (DDoS) attacks, and particularly DDoS attacks that target a top-level domain name server or employ a top-level domain name server in an attack against third-party servers.

### Background

The Domain Name System (DNS) is a naming system for devices and resources connected to the Internet or other networks. The DNS improves the user friendliness of network navigation by employing "resolvers" and domain name servers to translate easy-to-remember domain names to numerical IP addresses. For example, the DNS translates a website such as www.verisign.com to a wide range of data including IPv4 addresses, IPv6 addresses, email services, and more.

Domain names form a tree-like hierarchical name space. Each node in the tree, except the leaf nodes, is called a domain. At the top of the tree, the root domain delegates authority to Top Level Domains (TLDs) like .com, .net, .org, and .edu. The TLDs then delegate authority to create Second-Level Domains (SLDs), such as the colostate.edu domain, the verisign.com domain; and so forth. The repository of information that makes up the domain database is divided up into logical name spaces called zones. Each zone belongs to a single administrative authority and is served by a set of authoritative name servers. The multiple servers for each zone provide redundancy and fault tolerance.

TLDs such as .com and .net play a crucial role in the DNS. Popular TLDs are arguably more important than the DNS root because of the DNS's name space fan-out. For example, after a resolver learns the .com referral from the root, that referral is cached, and the resolver can send all subsequent queries for .com addresses to the .com TLD name server the resolver will not have to query the root again until the cached information expires. However, every unique SLD, such as verisign.com, must be sent to the .com TLD name server when first looked up. There are over 100 million zones under .com and .net, and only a portion of these zones is cached at any given time. A collapse of all .com or .net TLD name servers would thus render unreachable any zones that are not cached.

TLD attacks are relatively easy to perpetrate due to the nature of DNS communications. That is, DNS communications are typically sent via the User Datagram Protocol (UDP). UDP is a simple communication protocol for transmitting small data packets without a connection handshake, acknowledgment, ordering, or error correction. The low processing overhead of UDP makes it useful for streaming media applications such as video and Voice over IP, and for answering small queries from many sources, such as in DNS resolution. Unfortunately, these same properties allow attackers to use DNS resolution for nefarious purposes. Because UDP is connectionless, an attacker can "spoof' the source address (that is, forge a false source IP address in the IP packet such that the DNS server sends the query response to a third party) without having to worry about completing a connection handshake, resulting in the DNS server sending responses to a machine that never sent a query. Moreover, the query message can be relatively small (under 512 bytes) while the resulting response can be substantially larger due to large numbers of resource records in the response. This allows an attacker to hijack a DNS server to magnify an attack. DNS queries and response may also be sent over stateful Transmission Control Protocol (TCP), which exhibits similar vulnerabilities that can also be managed using embodiments of the invention disclosed herein.

Some attacks target the TLD itself. For example, an "outage" attack floods a TLD with queries in an attempt to either knock the TLD offline or overwhelm to the extent that it cannot respond to legitimate queries.

Other attacks use TLDs to multiply attack traffic aimed at third-party servers. In a "reflector" attack, for example, an attacker issues multiple DNS queries using a forged source address, causing the TLD to direct all responses toward the innocent victim, swamping the victim's host servers.

A third type of attack occurs when many queries all request the same SLD. The attacker may be trying to prod the TLD into defending itself by preemptively blacklisting the entire subdomain. Alternatively, the attacker may simply not bother to randomize the entire query name of each attack packet.

Collectively, these attacks are referred to as Distributed Denial-of-Service (DDoS) attacks because their purpose is to knock the target server offline, with the result that it cannot serve legitimate visitors.

### Summary

Embodiments of the present application provide a computer-implemented method for creating a white list of trustworthy resolvers by receiving a resolver profile for a resolver sending queries to a domain name server based on at least one of: a top-talker status of the resolver, a normalcy of distribution of domain names queried, or a continuity of distribution of query type; applying a policy to the resolver profile to determine whether the resolver is trustworthy; and adding the resolver to the white list if it is determined to be trustworthy. In another embodiment, a system for performing this method is provided.

Further embodiments of the present application provide a computer-implemented method for creating a white list of trustworthy resolvers by receiving a resolver profile for a resolver sending queries to a domain name server based on: a top-talker status of the resolver, a normalcy of distribution of domain names queried, and a continuity of distribution of query type; applying a policy to the resolver profile to determine whether the resolver is trustworthy; and adding the resolver to the white list if it is determined to be trustworthy. In another embodiment, a system for performing this method is provided.

It is to be understood that both the foregoing general description and the following detailed description are exemplary and explanatory only and are not restrictive of the application, as claimed.

The accompanying drawings, which are incorporated in and constitute a part of this specification, illustrate embodiments of the application and together with the description, serve to explain the principles of the application.

### Brief Description of the Drawings

The accompanying drawings, which are incorporated in and constitute a part of this specification, illustrate various embodiments and together with the description, serve to explain the principles of the embodiments. In the drawings:

FIG. 1 is a diagram of a domain name server in a DNS system.

FIG. 2 is a diagram illustrating communications between end users, resolvers, and domain name servers in a DNS system.

FIG. 3 is a histogram of query type distribution for all sources and for top-talkers.

FIG. 4 is a histogram comparing query type distribution between normal traffic and an attack event.

FIG. 5 is a histogram of query name distribution for all sources over a ten-minute period of normal traffic.

FIG. 6 is a histogram of query name distribution during an attack.

FIG. 7 is a flowchart of a method for analyzing query features, building a resolver profile, and creating a "white list" of trusted resolvers.

FIG. 8 is a flowchart of a method for analyzing aggregate traffic to determine whether an attack is occurring.

### Detailed Description

The following detailed description refers to the accompanying drawings. Wherever possible, the same reference numbers are used in the drawings and the following description to refer to the same or similar parts. While several exemplary embodiments and features are described herein, modifications, adaptations, and other implementations are possible, without departing from the spirit and scope of the invention. Accordingly, the following detailed description does not limit the invention. Instead, the proper scope of the invention is defined by the appended claims.

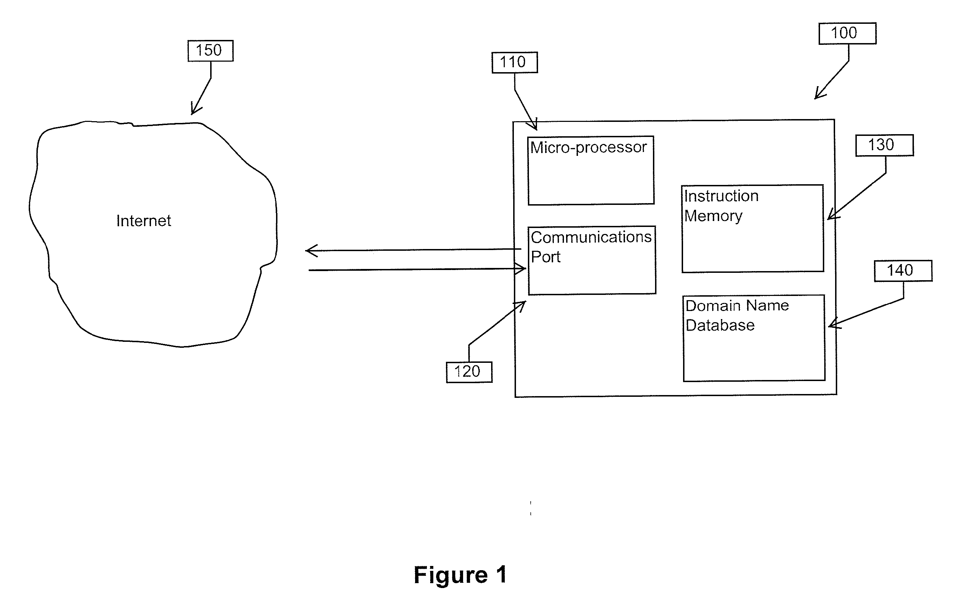

FIG. 1 is a diagram of a domain name server in the DNS. A DNS name server 100 comprises one or more processors 110, a communications port 120 for communicating with one or more networked devices via the internet 150, a computer memory 130 for storing instructions to cause the system to perform the operations described below, and a computer memory 140 for a database storing domain name and IP address information. In some embodiments the computer memory 130 containing instructions and the computer memory 140 containing domain name and IP address information may be combined into a single computer memory.

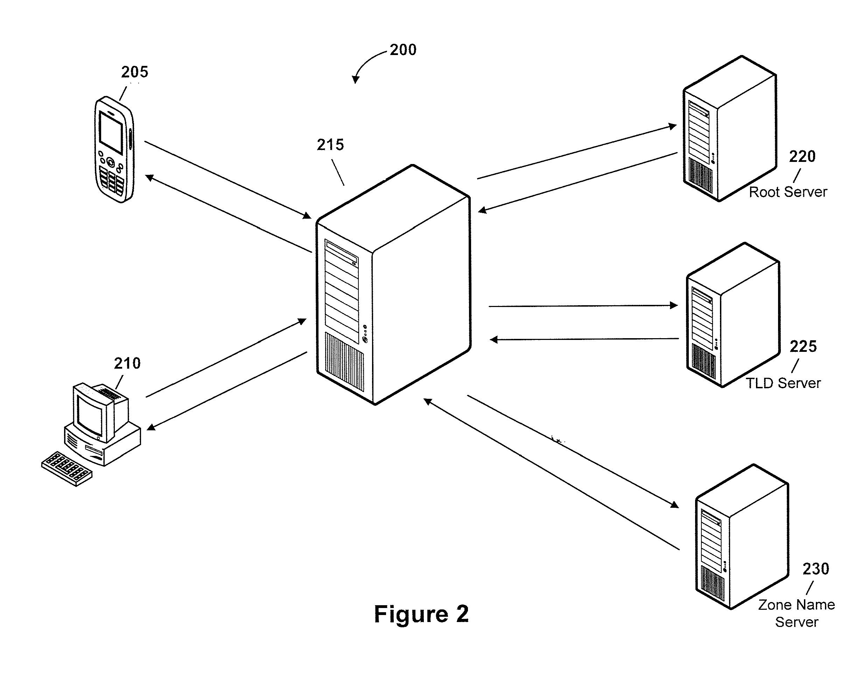

FIG. 2 is a diagram illustrating communications between end users, resolvers, and domain name servers in a DNS system 200. End users such as a smart phone 205 or a desktop computer 210 communicate with the local resolver 215. The local resolver 215 matches domain names with IP addresses by communicating with a root server 220, a TLD name server 225, and a zone name server 230. Once the resolver 215 receives IP address information for a domain, it will store that information in its own servers temporarily. For that reason the local resolver 215 is sometimes referred to as a "caching" resolver.

When an end user 205 enters a domain name to view a website, the end user 205 transmits the domain name to the resolver 215. The resolver then queries the name servers successively starting with the root server 220, the TLD name server 225, the zone name server 230 and so on until the entire domain name is resolved.

Each query contains within it several features that can be used to build a profile of the resolver that sent it. The same features can also be used to build a profile of aggregate traffic over time. Those features, described in detail below, include the "top-talker" status of the resolver, the IP time-to-live (TTL) variance among queries from an individual resolver, the query type distribution, and the query name distribution. The disclosed embodiments may detect DDoS attacks by detecting changes in the query profiles of individual resolvers or aggregate traffic. The disclosed embodiments may also mitigate attacks by blocking or ignoring presumed-malicious queries at the domain name server.

Top-talker status. Top-talkers are the most active resolvers. In one embodiment, top-talkers are defined as the largest resolvers that in aggregate make up 90% of query traffic. Generally the top-talkers list consists of a relatively small number of resolvers. For example, if millions of resolvers query a TLD over a period of time, a mere 40,000 of those may be responsible for 90% of the total traffic. The list of top-talkers is dynamic, however, with new resolvers replacing existing ones as their respective query volume to a particular TLD name server changes. In one embodiment, the top-talker list is updated on a rolling basis. In another embodiment, the top-talker list can be updated at various intervals.

IP TTL Variance. IP TTL is a counter in an IP packet that decrements every time the packet passes through a router. When the counter reaches zero, the packet is discarded. This mechanism prevents IP packets from endlessly circulating in an Internet system. The TTL variance thus serves as a relative measure of the distance, counted in router relays, an IP packet has traveled.

Given static network conditions and a fixed source and destination, the IP TTL of packets observed at the destination should vary little, if at all, since they would presumably travel the same route. While the use of UDP for DNS queries makes it trivial for attackers to spoof an address, the TTL from a spoofed address may not match the TTL in an IP packer from the real address. Therefore, while important legitimate DNS caching resolvers exhibit very little TTL variance, attacks involving spoofing tend to create high variance.

The TTL variance of packets from a single source at any given time is not a definitive indication that an attacker is spoofing that source address. Rather, an increase in variance is an indicator of an IP-level change related to a source. One explanation for an increase in IP TTL variance is an attacker spoofing an address that is currently active or that was previously profiled. In this case, when the spoofed IP packets arrive at the DNS name server, the paths travelled by spoofed packets will be different from the path travelled by packets from the authentic source. Moreover, if there are multiple sources sending queries with spoofed addresses, their respective packets will travel different paths also, contributing to even more TTL variance.

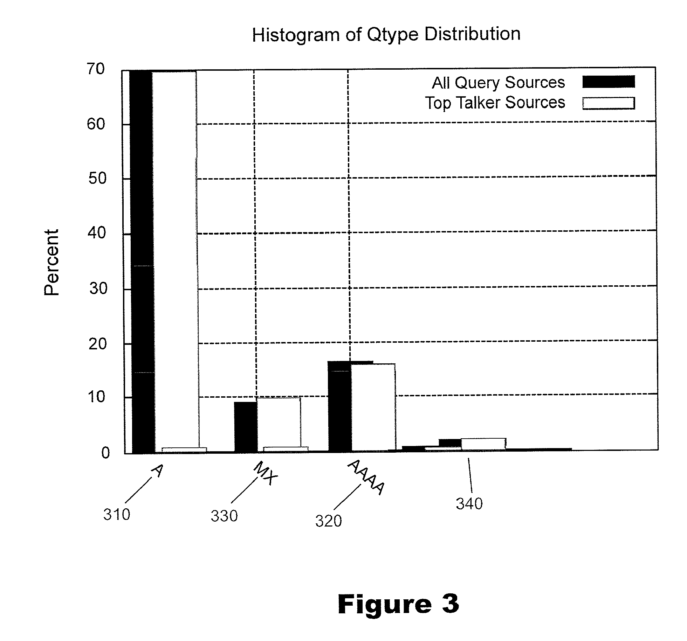

Query type Profiling. Resolvers send several different types of queries to a DNS server. FIG. 3 shows a typical distribution of query types over a non-attack period. The figure shows that queries for IPv4 addresses (type A) 310 clearly dominate. IPv6 addresses (type AAAA) 320 are the second most popular type requested, and are requested more frequently than mail server (type MX) 330 records. Other legitimate query types 340 are observed, including DNSSEC record types, service location record types, and even obsolete A6 records, but they constitute only a small portion of the query traffic.

FIG. 3 also shows that the query type distribution for top-talkers is roughly the same as for all traffic. This allows a TLD name server 225 to quantify normal behavior using a relatively small number of resolvers.

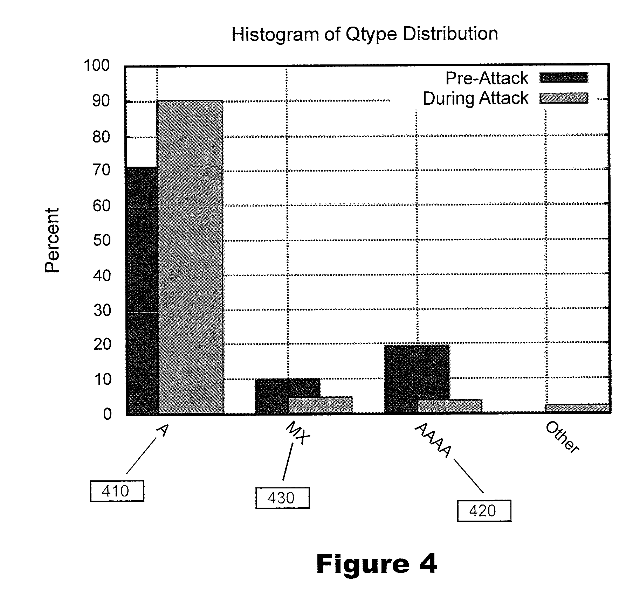

An attack event may skew the query type distribution with an overabundance of one type of query. FIG. 4 compares normal traffic query type distribution to traffic during an attack event. Notice that the resolver typically sends 70% type A queries 410, 20% type AAAA queries 420, and 10% type MX queries 430. During the attack this changes to 90% type A queries 410, 5% type AAAA queries 420, and 4% type MX queries 430.

In one embodiment, a deviation from previous query type distribution qualifies as "significant" if any of the three most popular query types changes its proportion of the overall query traffic by at least a constant factor. For example, a change from 70% to 90% type A queries may not be considered significant, but the proportion of type AAAA queries will have a corresponding drop significant enough to trigger this feature. In one embodiment this query type anomaly detection can be applied to queries from a single source. In another embodiment this query type anomaly detection can be applied to aggregate query traffic.

Query name Profiling. Unlike a profile of query types, a query name profile must deal with a vast number of potential names. There are only a few hundred potential query types and the data showed that only three of them contribute a substantial percentage of queries. In contrast, there are tens of millions of potential query names. Some legitimate busy sources can issue queries for millions of names over just a couple of days. Further, some malicious sources can issue this many queries in less than a minute.

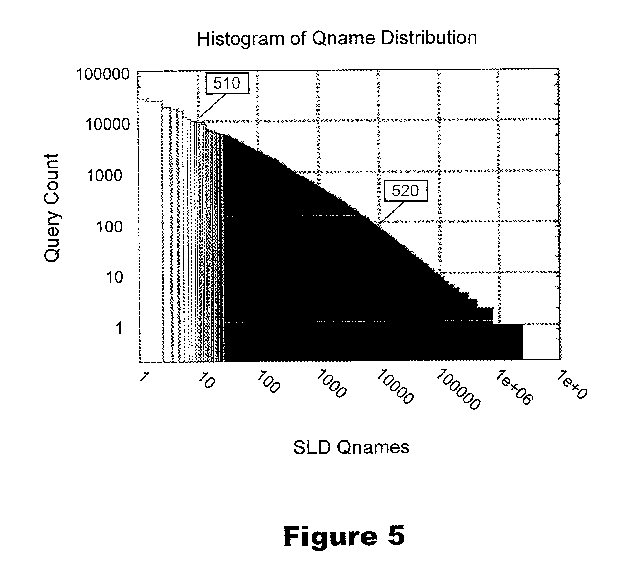

FIG. 5 shows the relative popularity of SLD names seen across all sources for just a 10 minute period. FIG. 5 shows that fewer than ten SLDs were queried over 10,000 times (point 510). Fewer than 10,000 SLDs were queried more than 100 times (point 520). The sheer size of the query name space represents a spatial complexity that may be unreasonable to profile for very long periods of time. This is because large resolvers may easily send tens of thousands of SLD requests in just minutes. Thus, the query name measurement period is capped to a relatively short duration. Such a short period does not lend itself well to profiling the distribution of SLDs that a resolver tends to query; however, it does allow us to observe when a top-talker (or any busy resolver) is sending a disproportionate number of queries to a specific SLD. Normally, a resolver should send a very small number of concurrent queries for a particular SLD before caching its IP address and sending further queries to the resolver's own servers. Therefore, a spike in the frequency of one or more SLDs may indicate an attack.

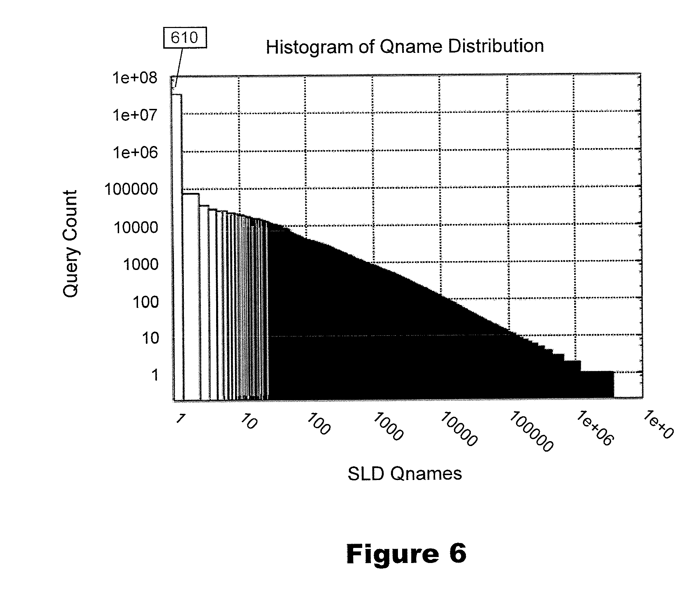

FIG. 6 shows domain name distribution during an attack event. If an attacker is launching a zone-targeted attack, then the SLD ([SLD].com) will be common to all attack queries. Alternatively, an attacker may simply not bother to randomize the SLD queried. In either case, the query name distribution will reveal a spike in the query name 610.

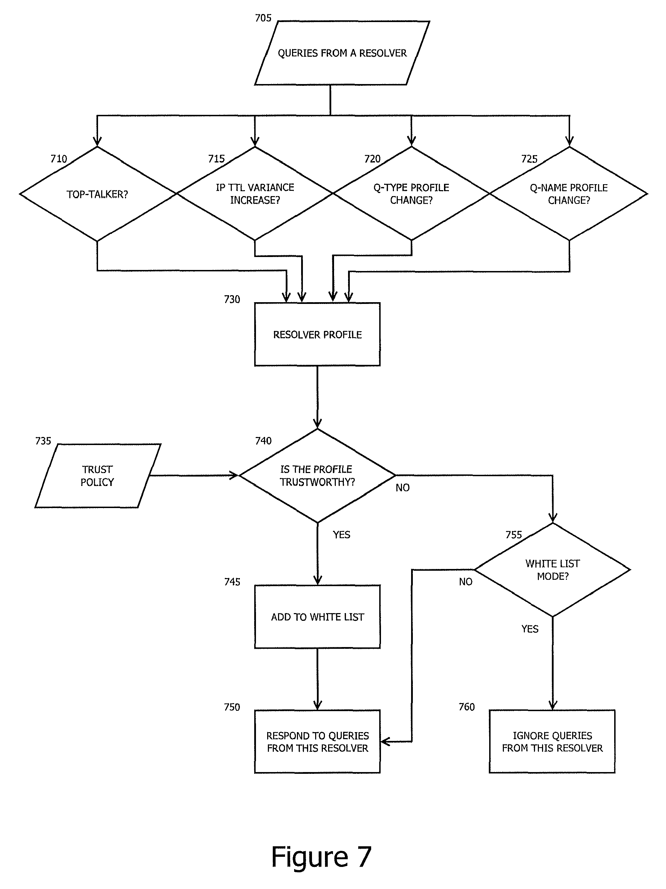

Creating a white list. FIG. 7 is a flowchart showing a method for generating a white list of trusted resolvers according to one embodiment of the invention. Queries from a resolver 705 are analyzed to determine the status of several features. Those features include: whether or not the resolver is a top-talker 710, whether the IP TTL variance of queries from the resolver has suddenly increased 715, whether the query type profile has undergone a substantial change 720, and whether the query name profile shows a sudden surge in the frequency of a particular SLD 725. The status of these features is used to build a resolver profile 730. In one embodiment, the resolver profile 730 consists of a binary 4-tuple in the form <top-talker, IP TTL, q-type, q-name>. A "1" in the first position indicates a non top-talker. A "1" in any of the other positions indicates that the feature is anomalous. For example, a profile of <0, 1, 0, 0> is a top-talker exhibiting an increase in TTL variance.

The resolver profile 730 is next compared to a trust policy 735. A trust policy 735 consists of the different resolver profiles the TLD would deem trustworthy, and thus assign to a white list. For example, a trust policy may look like: [<0, 0, 0, 0> <1, 0, 0, 0> <0, 1, 0, 0>]. This policy would assign both top-talker and non top-talker resolvers to a white list as long as all other behavior is normal. This policy would also assign top-talker resolvers to a white list even if they develop an IP TTL variance. A policy need not be static, and in fact can be altered at any time as conditions change. In one embodiment, detecting one or more resolvers with profiles not deemed trustworthy indicates that an attack event is occurring.

A TLD name server may continue responding to all queries even if some resolvers have profiles that are not deemed trustworthy and thus are not assigned to a white list. Similarly, a name server may continue responding to all queries even after determining that an attack is under way. If the attack is severe enough, however, the name server may choose to move to a white list mode 755. In a white list mode, the name server will respond only to queries from resolvers on the white list 750 while ignoring queries from resolvers not on the white list 760.

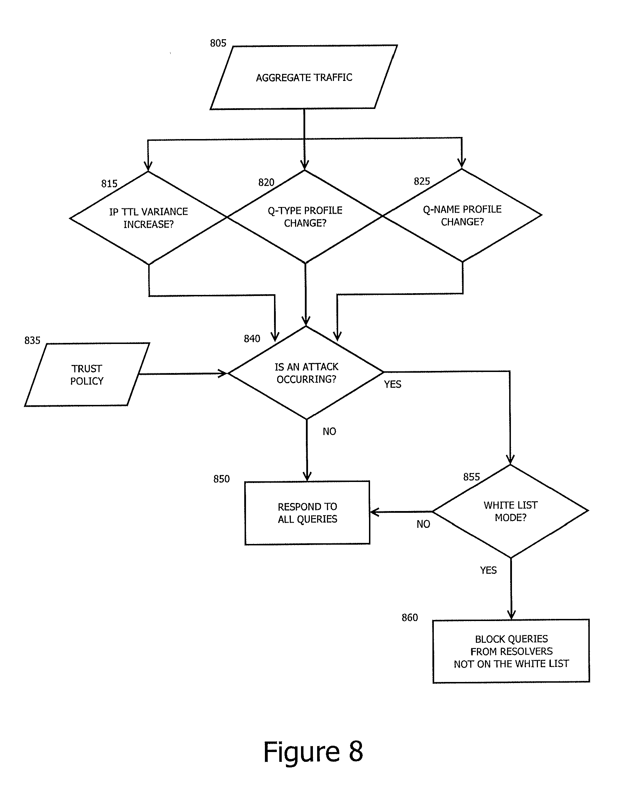

Detecting an attack. FIG. 8 is a flowchart for a method of detecting DDoS attacks at the name server according to another embodiment. In this embodiment, the DNS name server monitors the query features of aggregate traffic and detects changes in query features such as per-source IP TTL variance 815, query type distribution 820, and query name distribution 825. In one embodiment, detecting anomalous behavior in one or more query features of the aggregate traffic indicates that an attack is occurring 840. The TLD name server may continue responding to all queries 850 even if the name server determines that an attack is occurring 840. If the attack is severe enough, however, the name server may choose to move to a white list mode 855. In a white list mode, the name server will respond only to queries from resolvers on the white list while ignoring queries from resolvers not on the white list 860.

The foregoing description, along with its associated embodiments, has been presented for purposes of illustration only. It is not exhaustive and does not limit the invention to the precise form disclosed. Those skilled in the art will appreciate from the foregoing description that modifications and variations are possible in light of the above teachings or may be acquired from practicing the invention. For example, although four profile features are discussed, workable embodiments may employ either fewer features or additional features to generate a white list. The steps described need not be performed in the same sequence discussed or with the same degree of separation. Likewise various steps may be omitted, repeated, or combined, as necessary, to achieve the same or similar objectives. Accordingly, the invention is not limited to the above-described embodiments, but instead is defined by the appended claims in light of their full scope of equivalents.

## Claims

1. A computer-implemented method for creating a list of trustworthy DNS resolvers (215), the method comprising:
receiving, at a computer, a resolver profile (730) for a resolver (215) sending (705) queries to a domain name server (100, 220, 225, 230) based at least one of (i) a top-talker status (710) of the resolver (215), (ii) a normalcy of distribution (725) of domain names queried, or (iii) a continuity of distribution (720) of query type;
applying a policy (735) to the resolver profile (730) to determine (740) whether the resolver (215) is trustworthy; and
adding (745), by the computer, the resolver (215) to a list of trustworthy resolvers (215) if the resolver (215) is determined to be trustworthy.

2. The computer-implemented method of claim 1 wherein receiving comprises receiving a resolver profile (730) based on (iv) a continuity of an IP time-to-live variance ( 715) of queries from the resolver (215).

3. The computer-implemented method of any one of claims 1-2 comprising generating an indication of an attack condition if the resolver profile (730) is not determined to be trustworthy.

4. The computer-implemented method of any one of claims 1-3 comprising blocking queries from a resolver (215) if the corresponding resolver profile (730) is not determined to be trustworthy.

5. The computer-implemented method of any one of claims 1-4 wherein receiving comprises receiving a profile (730) for a resolver (215) sending queries to a top-level domain name server (225).

6. The computer-implemented method of any one of claims 1-5 wherein:
the resolver profile (730) comprises an array including one element for each profile feature; and
the elements comprise binary values indicating that profile features are either normal or abnormal.

7. The computer-implemented method of any one of claims 1-5 wherein:
applying a policy comprises applying a policy comprising one or more arrays including one element for each profile feature;
the elements are binary values indicating either a normal or abnormal profile feature; and
adding the resolver (215) comprises adding (745) the resolver (215) to the list of trustworthy resolvers (215) if its profile (730) matches one of the preset policy arrays.

8. A system for creating a list of trustworthy DNS resolvers (215) comprising:
a processing system (100) comprising one or more processors (110);
a communications port (120) for receiving communications from networked devices and for transmitting communications to the networked devices; and
a memory (130) storing instructions that, when executed by the processing system (100), cause the system (100) to perform the operations of any one of claims 1-7.

9. A computer-implemented method for creating a list of trustworthy DNS resolvers (215), the method comprising:
receiving, at a computer, a resolver profile (730) for a resolver (215) sending (705) queries to a domain name server (100, 220, 225, 230) based on (i) a top-talker status (710) of the resolver (215), (ii) a normalcy of distribution (725) of domain names queried, and (iii) a continuity of distribution (720) of query type;
applying a policy (735) to the resolver profile (730) to determine (740) whether the resolver (215) is trustworthy; and
adding (745), by the computer, the resolver (215) to a list of trustworthy resolvers (215) if the resolver (215) is determined to be trustworthy.

10. The computer-implemented method of claim 9, wherein receiving comprises receiving a resolver profile (730) based on (iv) a continuity of the IP time-to-live variance (715) of queries from the resolver (215).

11. The computer-implemented method of any one of claims 9-10 comprising generating an indication of an attack condition if the resolver profile (730) is not deemed trustworthy.

12. The computer-implemented method of any one of claims 9-11 comprising blocking queries from a resolver (215) if the corresponding resolver profile (730) is not determined to be trustworthy.

13. The computer-implemented method of any one of claims 9-12 wherein receiving comprises receiving a profile (730) for a resolver (215) sending queries to a top-level domain name server (225).

14. The computer-implemented method of any one of claims 9-13, wherein:
the resolver profile (730) comprises an array including one element for each profile feature; and
the elements are binary values indicating that profile features are either normal or abnormal.

15. The computer-implemented method of any one of claims 9-13, wherein:
applying a policy comprises applying a policy comprising one or more arrays including one element for each profile feature;
the elements are binary values indicating either a normal or abnormal profile feature; and
adding the resolver (215) comprises adding (745) the resolver to the list of trustworthy resolvers (215) if its profile (730) matches one of the preset policy arrays.

16. A system for creating a list of trustworthy DNS resolvers (215) comprising:
a processing system (100) comprising one or more processors (110);
a communications port (120) for receiving communications from networked devices and for transmitting communications to the networked devices; and
a memory (130) storing instructions that, when executed by the processing system (100), cause the system (100) to perform the operations of any one of claims 1-7.
